# EUROPEAN PATENT SPECIFICATION

(11) **EP 1 020 840 B1**
(45) Date of publication and mention of the grant of the patent: **29.11.2006**
(21) Application number: 99933243.0
(22) Date of filing: 02.08.1999
(51) Int. Cl.: G02F 1/133, G09G 3/36

(54) **ELECTROOPTIC DEVICE AND ELECTRONIC DEVICE**
ELEKTROOPTISCHE EINHEIT UND ELEKTRONISCHE EINHEIT
DISPOSITIF ELECTRO-OPTIQUE ET DISPOSITIF ELECTRONIQUE

(30) Priority: 04.08.1998 JP 22073798; 09.09.1998 JP 25584998
(43) Date of publication of application: 19.07.2000
(73) Proprietor: SEIKO EPSON CORPORATION, Shinjuku-ku, Tokyo 163-0811 (JP)
(72) Inventor: ISHII, Ryo, Seiko Epson Corporation, Suwa-shi, Nagano 392-8502 (JP)
(74) Representative: Sturt, Clifford Mark
(86) International application number: PCT/JP1999/004174
(87) International publication number: WO 2000/008625

(56) References cited:
- EP-A- 0 269 744
- EP-A- 0 750 288
- EP-A- 0 797 182
- JP-A- 6 102 530
- JP-A- 7 199 156
- JP-A- 8 194 205
- JP-A- 10 228 012
- JP-A- 59 065 879

## Description

### [Technical Field]

The present invention relates to an electro-optic device that has a driving circuit comprised of a memory circuit and a pixel driver that is provided for each pixel and that controls pixel display according to a data signal held in the memory circuit, and to electronic equipment, such as office automation equipment and portable equipment in which the electro-optic device is installed.

### [Background Art]

In recent years, as an information display device of portable equipments or the like, including a portable telephone and a portable information terminal, a liquid crystal device, which is an example of an electro-optic device, has been in use. The contents of displayed information have been conventionally displayed in characters. These days, however, dot-matrix liquid crystal panels have been used to display more information at a time, and the number of pixels is gradually increasing with a consequent higher duty.

Hitherto, for the above portable equipment, a passive matrix liquid crystal device has been used as a display device. However, a passive matrix liquid crystal device requires a higher voltage with an increasing duty for a selection signal of a scanning line when performing multiplex drive, posing a serious problem in battery-driven portable equipment that is strongly required to minimize power consumption.

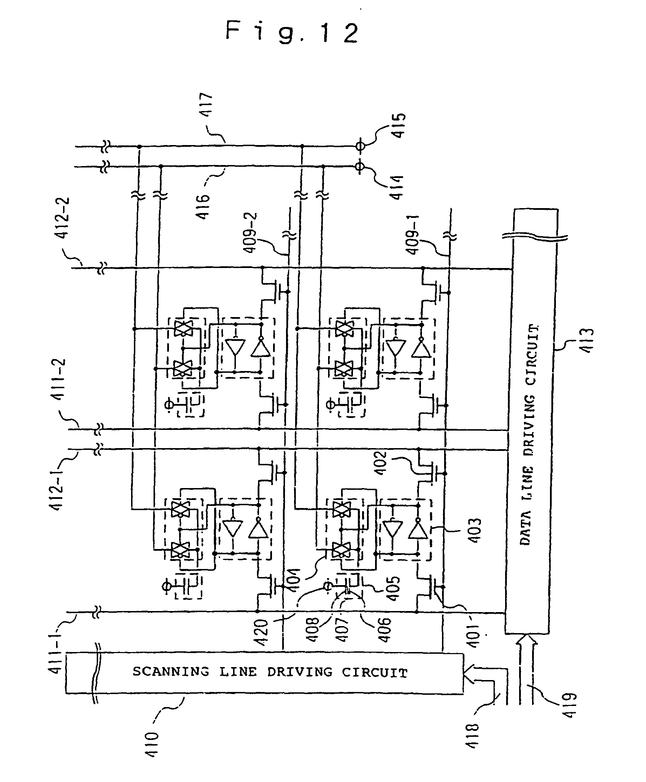

To solve such a problem, there has been proposed a static drive liquid crystal device in which one of a pair of substrates constituting a liquid crystal panel is formed of a semiconductor substrate, and a memory circuit shown in Fig. 12 is formed on the semiconductor substrate for each pixel to conduct display control based on data held in the memory circuit. In conjunction with Fig. 12, an operation of a conventional static drive liquid crystal device will now be described.

A scanning line drive circuit 410 is controlled by a scanning line drive circuit control signal 418, and a selection signal (scanning signal) is output to a selected scanning line 409-n ("n" is a natural number denoting a number of scanning lines). Likewise, a data line drive circuit 413 is controlled by a data line drive circuit control signal 419, and data signals are supplied to a selected pair of data lines 411-m and 412-m ("m" is a natural number denoting a number of data lines) so that they have mutually opposite phases (complementary signals).

At an intersection of the scanning line 409-n and the pair of data lines 411-m and 412-m, a circuit connected to those lines constitutes a pixel. n-channel MOS switching circuits 401 and 402 connected to the scanning line 409-n and the pair of data lines 411-m and 412-m are set to a conducting state when the scanning line 409-n is selected and a selection signal is supplied, and write complementary data signals of the pair of data lines 411-m and 412-m to a memory circuit 403. The memory circuit 403 has two inverters in feedback connection. Then, the scanning line 409-n is set at a nonselective potential and the pair of data lines 411-m and 412-m are set at a high impedance to thereby place the switching circuits 401 and 402 in a nonconducting state, and the data signals written to the memory circuit 403 are retained.

A liquid crystal pixel driver 404 composed of two transmission gate circuits is controlled by potential levels of a first node in the memory circuit 403 and a second node at an inverted level of a potential level at a point of connection of the first node. A first transmission gate circuit is connected to a first voltage signal line 416 and conducts according to a level of a data signal held by the memory circuit 403, and applies a first voltage 414 to a pixel electrode 406. On the other hand, a second transmission gate circuit is connected to a second voltage signal line 417 and conducts according to a level of a data signal held by the memory circuit 403, and applies a second voltage 415 to the pixel electrode 406. To be more specific, if the held data signal is at an H-level, then the first voltage signal line 416 that sets a liquid crystal layer 407 of a liquid crystal pixel driver 404 to an ON state in the case of a normally white display mode conducts, causing the first voltage 414 to be supplied to the pixel electrode 406 via the first transmission gate circuit of the liquid crystal driver 404, so that the liquid crystal pixel 405 is set to in a black display mode by a potential difference from a reference voltage 420 supplied to a common electrode 408. Similarly, if the held data signal is at an L-level, then the second voltage signal line 417 that sets the liquid crystal layer 407 in an OFF state conducts, causing the second voltage 415 to be supplied to the liquid crystal pixel 405 via the second transmission gate circuit of the liquid crystal driver 404, so that the liquid crystal pixel 405 is placed in a white display mode.

The foregoing structure allows a line voltage, the first and second voltage signals, and a reference voltage to be driven by a logic voltage alone. Also, little current except leakage current flows, because it is able to hold display screen by a data hold function of a memory circuit, in the case that the rewriting of a screen display is not necessary. Accordingly, consumption of electric power can be reduced.

However, in the conventional static drive liquid crystal device, the data signals for the pair of data lines must be complementary signals having phases opposite to each other for writing data, and must be controlled to a high impedance for holding data. Thus, control of the data lines has been extremely complicated, and a circuit configuration has also been complicated.

EP 0797182 discloses an active matrix LCD having a data holding circuit in each pixel. The active matrix LCD is provided with a substrate, a plurality of scanning electrodes, a plurality of signal electrodes and a display data holding circuit connected to corresponding scanning electrodes and signal electrodes. A switching device is provided connected to the display data holding circuit.

### [Disclosure of Invention]

The present invention has been made to solve the problem described above, and it is an object of the present invention to provide an electro-optic device that consumes less power, and features a simple control method and a simple control circuit configuration.

According to the present invention, there is provided an electro-optic device comprising, on a substrate thereof, a plurality of row scanning lines and a plurality of column scanning lines that intersect with each other; a plurality of column data lines provided along said plurality of column scanning lines; and a first and second voltage signal lines that supply first and second voltage signals; a plurality of pixel driving circuits disposed corresponding to intersections of said plurality of row scanning lines and said plurality of column scanning lines, the plurality of pixel driving circuits comprising: a pixel electrode disposed at a pixel; a switching circuit that is set to a conducting state by a conduction control signal output by a switching controls circuit when a corresponding row scanning line of the plurality of row scanning lines and a corresponding column scanning line of the plurality of column scanning lines is selected, and is set to a non-conducting state by a non-conduction control signal outputted by the switching control circuit when at least one of said row scanning line and said column scanning line is not selected; a memory circuit (including a CMOS transistor, the memory circuit capturing data signals provided by a column data line of the plurality of column data lines when said switching circuit is in the conducting state, and holding data signals of a column data line of the plurality of column data lines when said switching circuit is in the non-conducting state; and a pixel driver that outputs the first voltage signal to the pixel from the first voltage signal line when a data signal held in said memory circuit is at a first level, and that outputs the second voltage signal to the pixel from said second voltage signal line when the data signal is at a second level; the electro-optic device characterised in that: the switching control circuit simultaneously controls a number of the plurality of pixel driving circuits according to the number of input data lines for a number of simultaneously input data bits, the plurality of column data lines are are provided branched from the input data lines and the same data signal is applied simultaneously to the column data lines branched from each input data line; the plurality of pixel driving circuits that the sam: switching control circuit simultaneously controls captures, in the corresponding memory circuit in accordance with the conducting signal from the switching control circuit, data signals from the plurality of column data lines branched from the input data lines, and supplies, to a respective pixel electrode, voltage signals in accordance with the data signals held in the corresponding memory circuits.

The configuration in accordance with the present invention enables a line voltage, the first and second voltage signals, and a reference voltage to be driven at a level of a logic voltage. Furthermore, little current flows, because when there is no need to rewrite screen display, a display state can be held by a data holding function of the memory circuit. With this arrangement, comparison as a liquid crystal device indicates that power consumption is markedly reduced as compared with the conventional passive matrix liquid crystal device. Moreover, unlike the conventional static drive liquid crystal device, it is no longer necessary to carry out the complicated control wherein data signals for a pair of data lines are set to have opposite phases for writing data, and set at a high impedance for holding data, thus providing an advantage in that a circuit configuration can be simplified.

Furthermore, the foregoing electro-optic device in accordance with the present invention is characterized in that a pixel electrode disposed at the pixel is a light reflective type electrode, and the pixel driving circuit is provided under the pixel electrode via an electrical insulation film. This configuration provides an advantage in that an aperture ratio is markedly improved and a brighter easier-to-read screen can be obtained, as compared with a conventional static drive liquid crystal device in which a TFT (Thin Film Transistor) is formed on a transparent substrate, and in which an aperture ratio of a pixel has been limited by an area of a pixel driving circuit occupied in an area of one pixel.

According to the present invention, a number of the switching control circuits can be reduced, and the circuit configurations and the control of the column scanning line driving circuits can be simplified. In addition, there is an advantage in that a writing operation of an entire screen can be quickly completed, permitting a reduction in power consumption.

Furthermore, the foregoing electro-optic device in accordance with the present invention is comprising a row scanning line driving circuit for supplying row scanning signals to the row scanning lines and a column scanning line driving circuit for supplying column scanning signals to the column scanning lines, and at least either the row scanning line driving circuit or the column scanning line driving circuit is constituted by a shift register circuit. This configuration provides an advantage in that a circuit configuration and control of the scanning line driving circuits can be simplified.

In addition, the foregoing electro-optic device in accordance with the present invention is characterized in that it is constituted by a row scanning line driving circuit for supplying row scanning signals to the row scanning lines and a column scanning line driving circuit for supplying column scanning signals to the column scanning lines, wherein at least either the row scanning line driving circuit or the column scanning line driving circuit is constitued by a decoder circuit that selects a pertinent scanning line according to an address signal of a number of bits corresponding to a number of scanning lines. With this arrangement, when only a part of display on a screen needs to be rewritten, a pixel driving circuit of only a target pixel can be controlled to rewrite a data signal, providing an advantage in that power consumption can be markedly reduced.

Furthermore, the foregoing electro-optic device in accordance with the present invention is characterized in that a circuit device structure in the electro-optic device is a CMOS structure. This arrangement provides an advantage in that leakage current is no longer produced during a data holding period, making it possible to further reduce power consumption.

Moreover, an electronic equipment in accordance with the present invention is characterized in that it is equipped with the electro-optic device in accordance with the present invention described above. With this arrangement, an advantage is provided in which a markedly longer service life can be achieved, as compared with an electronic equipment using a conventional passive matrix liquid crystal device when performing battery drive, and a simpler control method and a simpler control circuit configuration than those in a conventional static drive liquid crystal device can be accomplished.

### [Brief Description of Drawings]

Fig. 1 is a block diagram showing essential sections of pixels and driving circuits or the lite thereof in an electro-optic device based on a first embodiment in accordance with the present invention.
Fig. 2 is a circuit diagram showing a driving circuit of the electro-optic device based on the first embodiment in accordance with the present invention, the driving circuit being constituted by a CMOS transistor.
Fig. 3 is a block diagram showing essential sections of pixels and driving circuits or the like thereof in an electro-optic device based on a second embodiment in accordance with the present invention.
Fig. 4 is a circuit diagram showing a driving circuit of the electro-optic device based on the second embodiment in accordance with the present invention, the driving circuit being constituted by a CMOS transistor.
Fig. 5 is a block diagram showing essential sections of pixels and driving circuits or the like thereof in an electro-optic device based on a third embodiment in accordance with the present invention.
Fig. 6 is a circuit diagram showing a driving circuit of the electro-optic device based on the third embodiment in accordance with the present invention, the driving circuit being constituted by a CMOS transistor.
Fig. 7 is a block diagram showing essential sections of pixels and driving circuits or the like thereof in an electro-optic device based on a fourth embodiment in accordance with the present invention.
Fig. 8 is a circuit diagram showing a driving circuit of the electro-optic device based on the fourth embodiment in accordance with the present invention, the driving circuit being constituted by a CMOS transistor.
Fig. 9 is a circuit diagram showing a scanning line driving circuit of the electro-optic device based on the first to fourth embodiments in accordance with the present invention that is constituted by a shift register circuit formed using a CMOS transistor.
Fig. 10 is a circuit diagram showing a scanning line driving circuit of the electro-optic device based on the first to fourth embodiments in accordance with the present invention that is constituted by a decoder circuit formed using a CMOS transistor.
Fig. 11 is a diagram showing an electronic equipment based on a fifth embodiment in accordance with the present invention.
Fig. 12 is a diagram showing a conventional static drive liquid crystal device.
Fig. 13 is a top plan view of a liquid crystal device.
Fig. 14 is a sectional view of the liquid crystal device of Fig. 13.

### Description of Reference Numerals

101 ... Liquid crystal pixel driving circuit
102 ... Switching circuit
103 ... Memory circuit
104 ... Liquid crystal pixel driver
105 ... Liquid crystal pixel
106 ... Pixel electrode
107 ... Liquid crystal layer
108 ... Common electrode
109 ... Switching control circuit
110 ... Row scanning line
111 Row scanning line driving circuit
112 ... Column scanning line
113 ... Column scanning line driving circuit
114 ... Input data line
115 ... Column data line
116 First voltage
117... Second voltage
118 ... First voltage signal line
119 ... Second voltage signal line
120 ... Row scanning line driving circuit control signal
121 ... Column scanning line driving circuit control signal
122 ... Reference voltage
201 Latch circuit
301 ... Display unit
302 ... Portable telephone

### [Best Mode for Carrying Out the Invention]

The following will describe embodiments of the present invention in conjunction with the accompanying drawings.

### (First Embodiment)

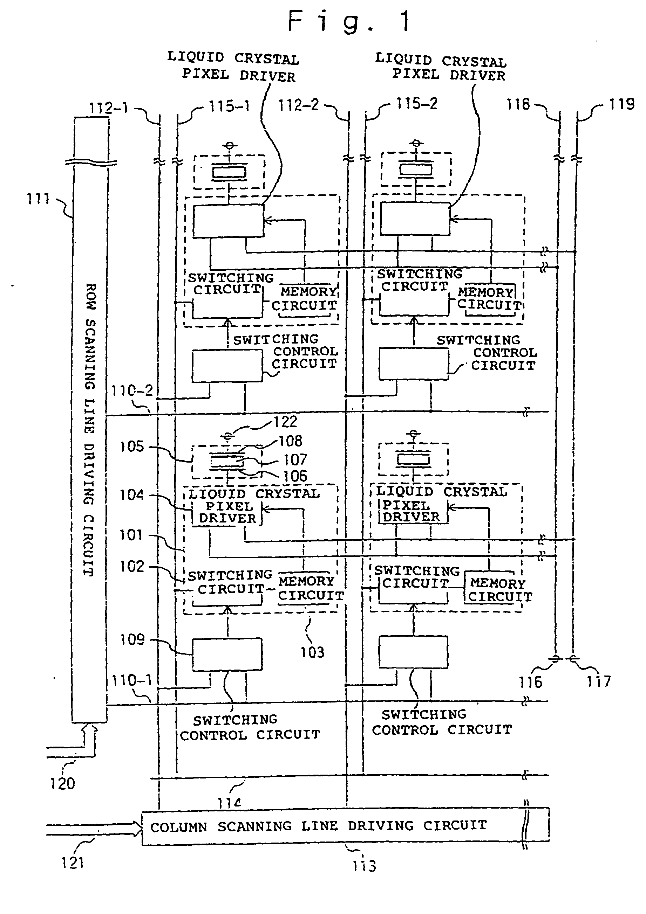

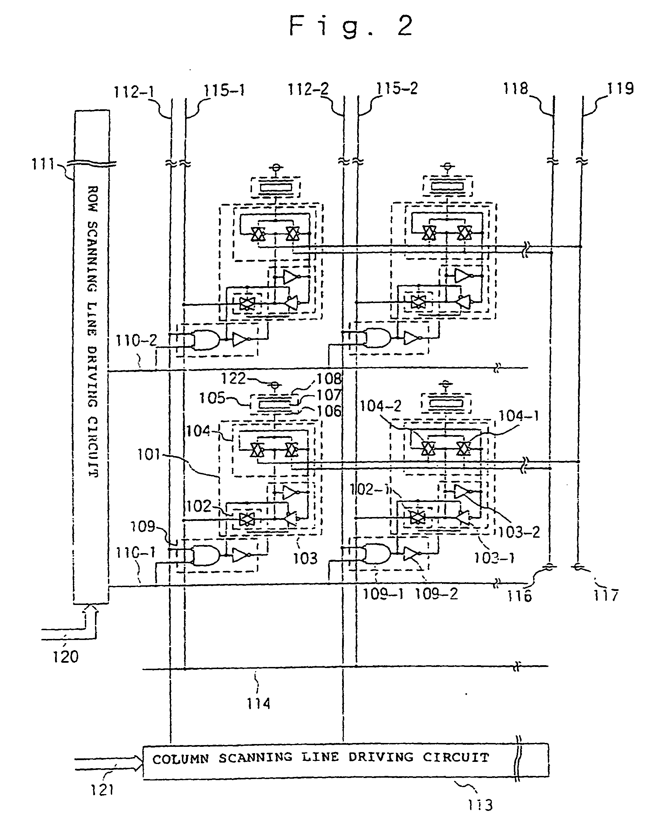

Fig. 1 is a block diagram showing essential sections of pixels and driving circuits or the like thereof in an electro-optic device based on a first embodiment in accordance with the present invention. Fig. 2 is a detailed circuit diagram of Fig. 1.

Referring to Fig. 1, in a pixel region, row scanning lines 110-n ("n" indicates a natural number denoting a row of a row scanning line) and column scanning lines 112-m ("m" indicates a natural number denoting a column of a column scanning line) are arranged in a matrix pattern, and a driving circuit of each pixel is formed at an intersection of the row and column scanning lines. Furthermore, in the pixel region, a column data line 115-d ("d" indicates a natural number denoting a column of a column data line) branched from an input data line 114 is also disposed along the column scanning line 112-m. A row scanning line driving circuit 111 is disposed in a peripheral region adjacent to rows in the pixel region, and a column scanning line driving circuit 113 is disposed in a peripheral region adjacent to columns in the pixel region.

The row scanning line driving circuit 111 is controlled by a row scanning line driving circuit control signal 120, and a selection signal (scanning signal) is output to a selected row scanning line 110-n. Row scanning lines that have not been selected are set at a nonselective potential. Likewise, the column scanning line driving circuit 113 is controlled by a column scanning line driving circuit control signal 121, a selection signal is output to a selected column scanning line 112-m, and column scanning lines that have not been selected are set at a nonselective potential. A row scanning line and a column scanning line to be selected are decided by the control signals 120 and 121. In other words, the control signals 120 and 121 are address signals for specifying pixels to be selected.

A switching control circuit 109 disposed in the vicinity of an intersection of a selected row scanning line 110-n and a selected column scanning line 112-m outputs an ON signal (conduction control signal) upon receipt of selection signals of the two scanning lines, and outputs an OFF signal (nonconduction control signal) that renders at least one of the row scanning line 110-n and the column scanning line 112-m nonselective. In other words, the ON signal is issued only from the switching control circuit 109 for the pixel positioned at the intersection of the selected row scanning line and column scanning line, while the OFF signals are issued from the remaining switching control circuits. In this embodiment, a liquid crystal pixel driving circuit 101 is controlled by the ON and OFF signals of the switching control circuits 109.

A configuration and operation of the liquid crystal pixel driving circuit 101 will now be described.

A switching circuit 102 is set to a conducting mode by the ON signal of the switching control circuit 109, while it is set to a nonconducting mode by the OFF signal. When the switching circuit 102 is set to the conducting state, a data signal of a column data line 115-d connected thereto is written to a memory circuit 103 via the switching circuit 102. On the other hand, the switching circuit 102 is set to the nonconducting state by the OFF signal of the switching control circuit 109, and it holds the data signal written to the memory circuit 103.

The data signal held in the memory circuit 103 is supplied to a liquid crystal pixel driver 104 disposed for each pixel. According to a level of the supplied data signal, the liquid crystal pixel driver 104 supplies either a first voltage 116 applied to a first voltage signal line 118, or a second voltage 117 applied to a second voltage signal line 119 to a pixel electrode 106 of a liquid crystal pixel 105. In the present invention, a pixel refers to an electro-optic material that electrically performs optical actions, such as optical modulation and luminescence, or a pixel electrode for each pixel that applies electrical actions to the above. When a liquid crystal device is in a normally white display mode, the first voltage 116 sets the liquid crystal pixel 105 to a black display mode, while the second voltage 117 sets the liquid crystal pixel 105 to a white display mode.

In the liquid crystal pixel driver 104, when a data signal retained at the memory circuit 103 is at an H-level, a gate connected to the first voltage signal line 118 that causes a liquid crystal to provide black display in the case of a normally white display mode is set to the conducting state, the first voltage 116 is supplied to the pixel electrode 106, and a potential difference from a reference voltage 122 supplied to a common electrode 108 causes the liquid crystal pixel 105 to be set to the black display mode. Similarly, when the held data signal is at an L-level, in the liquid crystal pixel driver 104, a gate connected to the second voltage signal line 119 is set to the conducting state, and the second voltage 117 is supplied to the pixel electrode 106, causing the liquid crystal pixel 105 to be set to the white display mode.

The configuration discussed above allows a line voltage, the first and second voltage signals, and the reference voltage to be driven at a level of a logic voltage, and little current except leakage current flows, because it is able to hold display screen by a data hold function of a memory circuit, in the case that the rewriting of a screen display is not necessary. In addition, writing to a pixel is controlled by a logic of the selection signals of the two scanning lines, namely, rows and columns, so as to enable control of the pixels independently of potentials of the data lines. This arrangement obviates the need for complicated control in a conventional static drive liquid crystal device in which data signals of two data lines are set to have opposite phases (complementary data signals) for writing when data is written, and in which the data lines are set at a high impedance for holding data so as to set transistors connected to the data lines to a nonconducting state.

Each of the liquid crystal pixels 105 is provided with the pixel electrode 106 to which either the first voltage 116 or the second voltage 117 selected according to a held data signal is supplied from the liquid crystal pixel driver 104. A liquid crystal layer 107 lying between the pixel electrode 106 and the common electrode 108 is subjected to a potential difference between the two electrodes, and the black display mode (or the ON display mode) or the white display mode (or the OFF display mode) is set according to a change in alignment of liquid crystal molecules based on the potential difference. In a liquid crystal device, a liquid crystal is sealed and sandwiched between a semiconductor substrate and a light transmitting substrate, such as glass, pixel electrodes are disposed in a matrix pattern on the semiconductor substrate, and the liquid crystal pixel driving circuits, the row scanning lines, the column scanning lines, the data lines, the row scanning line driving circuit, the column scanning line driving circuit, etc. mentioned above are formed under the pixel electrodes. Highly mobile complementary transistors having a MOS structure can be formed on a semiconductor substrate, and a multilayer wiring structure can be easily formed. Hence, by using the transistors and the multilayer wiring, various circuits mentioned above can be configured. For each pixel, a voltage is applied (pixel by pixel) between the pixel electrode 106 and the common electrode 108 formed on an inner surface of the opposing light transmitting substrate, thereby supplying a voltage to the liquid crystal layer 107 for each pixel that lies therebetween so as to change the alignment of liquid crystal molecules for each pixel.

In this case, if the pixel electrode 106 of the liquid crystal pixel 105 is formed as a light reflecting electrode of a metal, a dielectric multilayer film, or the like, and the liquid crystal pixel driving circuit 101 is provided on the semiconductor substrate under the liquid crystal pixel electrodes via an electrical insulation film, then an aperture ratio is markedly improved. More specifically, in the past, each liquid crystal pixel driving circuit was formed using a TFT on a light transmitting substrate, and an area occupied by the liquid crystal pixel driving circuit, which does not provide a light transmitting region, in an area of one pixel limited the aperture ratio of the liquid crystal pixel. In comparison, the pixel electrodes and the liquid crystal pixel driving circuits are laminated according to the present invention, so that reflective pixel electrodes that occupy almost an entire area of one pixel can be disposed above the liquid crystal pixel driving circuit. Therefore, the aperture ratio can be dramatically improved, allowing a brighter, easier-to-read screen to be achieved.

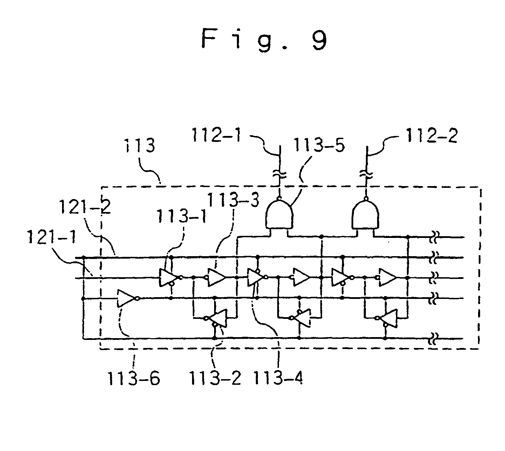

The column scanning line driving circuit 113 of Fig. 1 can be formed using a shift register circuit shown in Fig. 9. In Fig. 9, a column scanning line driving circuit control signal 121 composed of two signals, namely, a scanning signal 121-1 of positive logic (H-level is an active level) and a clock signal 121-2 is inputted, the column scanning lines 112-m can be selected in sequence in synchronization with the clock signal 121-2 by negative logic (L-level is an active level). More specifically, the clock signal 121-2, together with a signal that has been inverted by an inverter 113-6 formed of a CMOS transistor, is used as a control signal for the shift register circuit. The scanning signal 121-1 is captured by a clocked inverter 113-1 formed of a CMOS transistor in a first stage at a rise of the clock signal 121-2, inverted by an inverter 113-3 formed of a CMOS transistor, and an output is fed back by clocked inverters 113-2 and 113-4 formed of two CMOS transistors at a fall of the clock signal 121-2 to perform an operation for holding a scanning signal and an operation for transferring the scanning signal to the following stage, thereby transferring the scanning signals in sequence. A NAND gate circuit 113-5 formed of a CMOS transistor obtains a logical conjunction of outputs of two adjoining stages, and outputs selection signals. The NAND gate circuit 113-5 is provided so that output phases of the selection signals 112-m and 112-m+1 do not overlap each other. With this arrangement, the scanning lines are selected one after another.

Similarly, configuring the row scanning line driving circuit 111 by a shift register circuit similar to that shown in Fig. 9 makes it possible to simplify the circuit configurations and control of the two scanning line driving circuits.

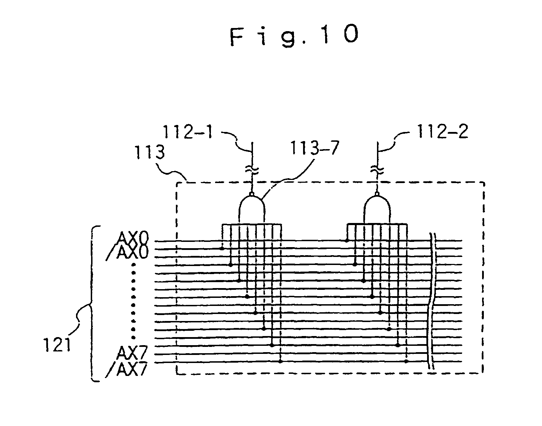

The column scanning line driving circuit 113 can be formed of a decoder circuit of a number of bits (AX0, /AX0, to AX7, /AX7) corresponding to a number of scanning lines, as shown in Fig. 10. The decoder circuit can be configured to receive the column scanning line driving circuit control signal 121 composed of an address signal, wherein the control signal 121 is decoded by a NAND gate circuit 113-7 formed of a CMOS transistor to select a corresponding column scanning line 112-m, and a selection signal can be output. This arrangement allows a selection signal to be output to an arbitrary scanning line according to an address signal, permitting pixels to be accessed at random.

By configuring the row scanning line driving circuit 111 by a decoder circuit similar to that shown in Fig. 10, when only partial display on a screen has to be rewritten, a liquid crystal pixel driving circuit for only a target pixel can be controlled to rewrite a data signal. In the present invention, each pixel is provided with the memory circuit 103, and unless the switching circuit 102 conducts by a selection signal of row and column scanning lines, the data signal written to the memory circuit 103 is retained. Hence, only the pixel to be rewritten can be accessed for rewriting.

As shown in Fig. 2, in this embodiment, the switching control circuit 109 can be configured by a logic circuit of a NOR gate circuit 109-1 formed of a CMOS transistor and an inverter 109-2 formed of a CMOS transistor. The NOR gate circuit 109-1 outputs an ON signal of the positive logic when selection signals of the negative logic are applied to two inputs thereof, and an ON signal of the negative logic is output by the inverter 109-2. Furthermore, the switching circuit 102 can be configured by a transmission gate 102-1 formed of a CMOS transistor. The transmission gate 102-1 is set to the conducting state based on the ON signal of the switching control circuit 109 to connect the column data line 115 and the memory circuit 103, whereas it is set to the nonconducting state based on the OFF signal. The memory circuit 103 can be configured so that a clocked inverter 103-1 formed of a CMOS transistor and an inverter 103-2 formed of a CMOS transistor are feedback-connected. The data signal is captured from the switching circuit 102 into the memory circuit 103 in response to an ON signal of the switching control circuit 109 and inverted by the inverter 103-2, and an output is fed back by a clocked inverter 103-1 operated by the OFF signal of the switching control circuit 109 so as to hold the data signal. The liquid crystal pixel driver 104 can be configured by transmission gates 104-1 and 104-2 formed of two CMOS transistors. If the data signal held at the memory circuit 103 is at the H-level, then the transmission gate 104-1, which is connected to the first voltage signal line 118 that causes a liquid crystal to provide the black display in the case of the normally white display mode, is set to a conducting state in the liquid crystal pixel driver 104, and the first voltage 116 is supplied to the pixel electrode 106, causing the liquid crystal pixel 105 to be set to the black display mode due to a potential difference from the reference voltage 122 supplied to the common electrode 108. Similarly, if the held data signal is at the L-level, then the transmission gate 104-2 connected to the second voltage signal line 119 is set to the conducting state, causing the second voltage 117 to be supplied to the pixel electrode 106, so that the liquid crystal pixel 105 is set to the white display mode.

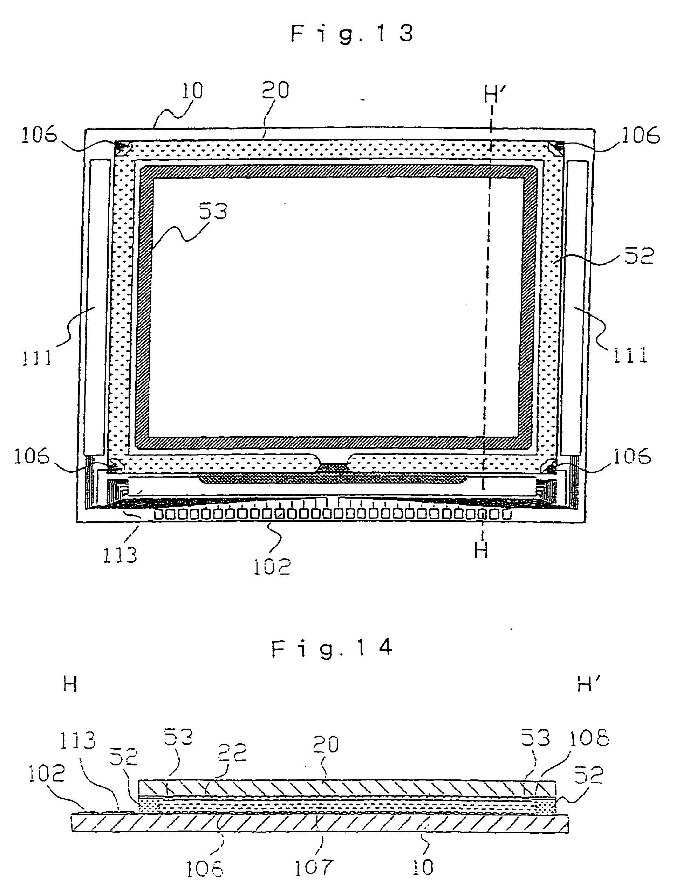

The entire configuration of the liquid crystal device constituted as described above will now be explained with reference to Fig. 13 and Fig. 14. Fig. 13 is a top plan view of a liquid crystal device substrate 10 with components formed thereon, observed from a side of a opposite substrate 20, and Fig. 14 is a sectional view taken at the line H-H' of Fig. 13 that includes the opposite substrate 20.

In Fig. 13, a sealing member 52 is provided on the liquid crystal device substrate 10 composed of, for example, a semiconductor substrate, along an edge thereof, and a light-shielding film (picture frame) 53 that surrounds a non-pixel region is provided around a pixel region in parallel to an inner side of the sealing constituent 52. In a region on an outer side of the sealing constituent 52, a column scanning line driving circuit 113 and a mounting terminal 102 are provided along one side of the liquid crystal device substrate 10, and the row scanning line driving circuits 111 are provided along two sides adjacent to the foregoing one side. If a delay of a row scanning signal supplied to a row scanning line 110 does not pose a problem, then a row scanning line driving circuit 111 may be provided only on one side. The opposite substrate 20 is formed of a transparent substrate, such as glass, and a conducting member 106 for providing electrical conduction between the liquid crystal device substrate 10 and the opposite substrate 20 is provided in at least one place of a corner portion of the opposite substrate 20. The opposite substrate 20 is secured to the liquid crystal device substrate 10 by the sealing constituent 52. Furthermore, the liquid crystal 107 is sealed in a gap formed by a pair of the substrates 10 and 20. The liquid crystal 107 may employ a variety of liquid crystals, including a twisted nematic (TN) type, a homeotropic alignment type, a planar alignment type without twist, a bistable type such as a ferroelectric type, and a polymer dispersed type or the like. In Fig. 14, reference numeral 106 denotes pixel electrodes arranged in a matrix pattern in a pixel region on the liquid crystal device substrate 10, reference numeral 22 denotes a black matrix (this may be omitted) formed on the opposite substrate 20, and reference numeral 108 denotes common electrodes composed of ITO formed on the opposite substrate 20. Alternatively, the pixel electrodes 106 and the common electrodes 108 may be disposed to oppose each other on the liquid crystal device substrate 20, and a transverse electric field may be applied to the liquid crystal 107. Furthermore, the liquid crystal device substrate 10 may use a glass substrate rather than the semiconductor substrate, and the pixel driving circuits may be constituted using thin-film transistors composed of silicon layers formed on substrates to constitute the electro-optic device in accordance with the present invention.

In the following embodiments, the constitution of the liquid crystal device will be the same as that shown in Fig. 13 and Fig. 14.

### [Second Embodiment]

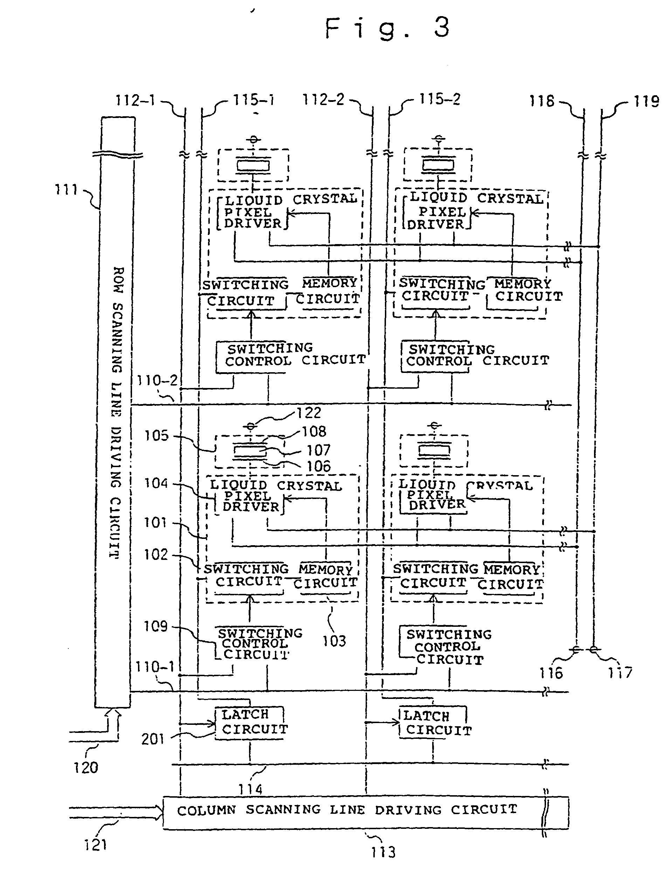

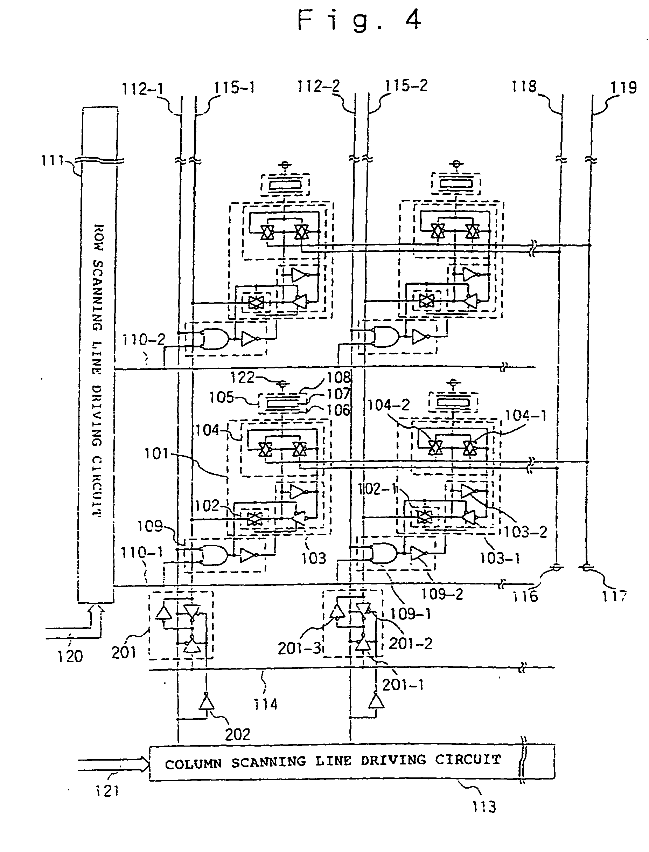

Fig. 3 is a block diagram showing essential sections of pixels and driving circuits or the like in a liquid crystal device that is an electro-optic device of a second embodiment in accordance with the present invention, and Fig. 4 is a detailed circuit diagram thereof

As shown in Fig. 3, this embodiment is configured by adding a latch circuit 201, which is disposed at a point where a column data line 115 is branched from an input data line 114, to the block diagram of Fig. 1 shown in conjunction with the first embodiment. In this embodiment, configurations not explained in particular are identical to those of the first embodiment.

When the latch circuit 201 captures a data signal from the input data line 114 into a corresponding column data line 115-d when a column scanning line 112-m is selected, or holds the data signal of a column data line 115-d when the column scanning line 112-m is not selected.

According to this configuration, a capacitance parasitic to the input data line 114 can be reduced to only a capacitance of the column data line 115 connected to the selected latch circuit 201, permitting a marked reduction in power consumption to be achieved.

As illustrated in Fig. 4, this embodiment is constituted by adding the latch circuit 201 to the circuit diagram of Fig. 2 shown in conjunction with the first embodiment The latch circuit 201 can be constituted by a logic circuit composed of clocked inverters 201-1 and 201-2 formed of CMOS transistors, and an inverter 201-3 formed of a CMOS transistor. A selection signal of the column scanning line 112-m, together with a signal that has been inverted by an inverter 202 formed of a CMOS transistor, is used as a signal for controlling the latch circuit 201. The data signal received from the input data line 114 is captured by the clocked inverter 201-1 in the first stage at a fall of a selection signal of the column scanning line 112-m, inverted by an inverter 201-3, and an output is fed back by the clocked inverter 201-2 at a rise of a selection signal of the column scanning line 112-m to perform an operation for holding the data signal.

### [Third Embodiment]

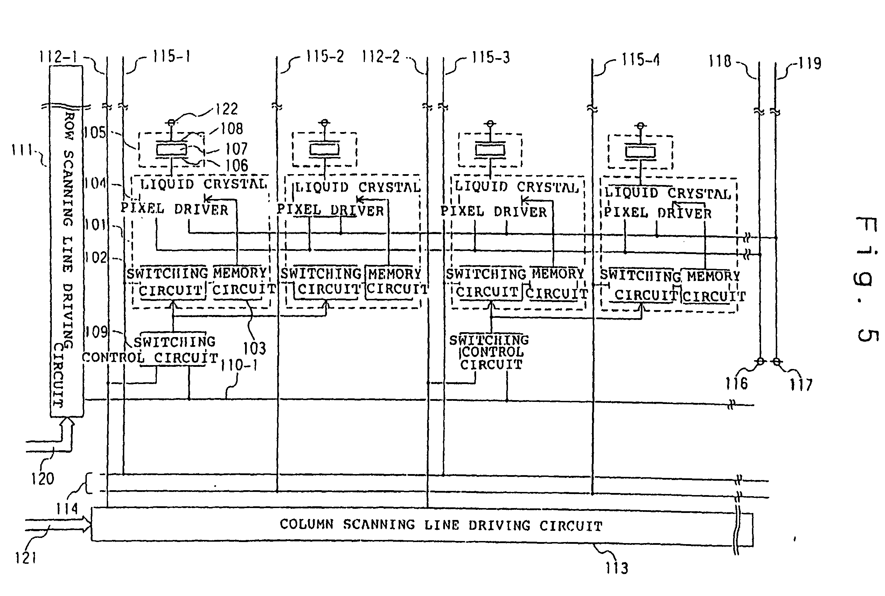

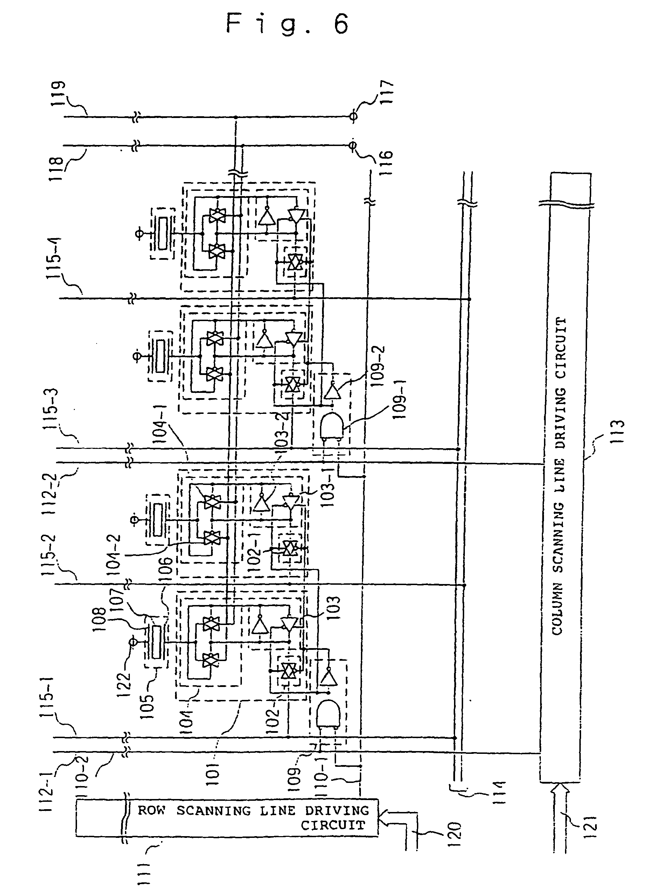

Fig. 5 is a block diagram showing essential sections of pixels and driving circuits thereof, or the like in a liquid crystal device that is an electro-optic device of a third embodiment in accordance with the present invention, and Fig. 6 is a detailed circuit diagram thereof.

As shown in Fig. 5, in this embodiment, two bits of simultaneous input data signal are used. In this embodiment, configurations not explained in particular are identical to those of the first embodiment.

In a pixel region, row scanning lines 110-n ("n" indicates a natural number denoting a row of a row scanning line) and column scanning lines 112-m ("m" indicates a natural number denoting a column of a column scanning line) are arranged in a matrix pattern, and a driving circuit for each pixel is formed at an intersection of the row and column scanning lines. Furthermore, in the pixel region, a column data line 115-d ("d" indicates a natural number denoting a column of a column data line) branched from two input data lines 114 for the number of simultaneous input data bits is also disposed along the column scanning line 112-m. A row scanning line driving circuit 111 is disposed in a peripheral region adjacent to rows in the pixel region, and a column scanning line driving circuit 113 is disposed in a peripheral region adjacent to columns in the pixel region.

The row scanning line driving circuit 111 is controlled by a row scanning line driving circuit control signal 120, and a selection signal (scanning signal) is output to a selected row scanning line 110-n. Row scanning lines that have not been selected are set at a nonselective potential. Likewise, the column scanning line driving circuit 113 is controlled by a column scanning line driving circuit control signal 121, a selection signal is output to a selected column scanning line 112-m, and column scanning lines that have not been selected are set at a nonselective potential. A row scanning line and a column scanning line to be selected are decided by the control signals 120 and 121. In other words, the control signals 120 and 121 are address signals for specifying pixels to be selected.

A switching control circuit 109 disposed in the vicinity of an intersection of a selected row scanning line 110-n and a selected column scanning line 112-m outputs an ON signal upon receipt of selection signals of the two scanning lines, and outputs an OFF signal that renders at least one of the row scanning line 110-n and the column scanning line 112-m nonselective. In other words, the ON signal is issued only from the switching control circuit 109 for the pixel positioned at the intersection of the selected row scanning line and column scanning line, while the OFF signals are issued from the remaining switching control circuits. In this embodiment, two liquid crystal pixel driving circuits 101 are controlled by the ON and OFF signals of the single switching control circuit 109.

A configuration and operation of the liquid crystal pixel driving circuit 101 will now be described.

A switching circuit 102 is set to a conducting state by the ON signal of the switching control circuit 109, while it is set to a nonconducting state by the OFF signal. When the switching circuit 102 is set to the conducting state, a data signal of a column data line 115-d connected thereto is written to a memory circuit 103 via the switching circuit 102. On the other hand, the switching circuit 102 is set to the nonconducting state by the OFF signal of the switching control circuit 109, and it holds the data signal written to the memory circuit 103.

The data signal held in the memory circuit 103 is supplied to a liquid crystal pixel driver 104 disposed for each pixel. According to a level of the supplied data signal, the liquid crystal pixel driver 104 supplies either a first voltage 116 applied to a first voltage signal line 118 or a second voltage 117 applied to a second voltage signal line 119 to a pixel electrode 106 of a liquid crystal pixel 105. When a liquid crystal device is in a normally white display mode, the first voltage 116 sets the liquid crystal pixel 105 to a black display mode, while the second voltage 117 sets the liquid crystal pixel 105 to a white display mode.

In the liquid crystal pixel driver 104, when a data signal retained at the memory circuit 103 is at an H-level, a gate connected to the first voltage signal line 118 that causes a liquid crystal to provide black display in the case of a normally white display mode is set to the conducting state, the first voltage 116 is supplied to the pixel electrode 106, and a potential difference from a reference voltage 122 supplied to a common electrode 108 causes the liquid crystal pixel 105 to be set to the black display mode. Similarly, when the held data signal is at an L-level, in the liquid crystal pixel driver 104, a gate connected to the second voltage signal line 119 is set to the conducting state, and the second voltage 117 is supplied to the pixel electrode 106, causing the liquid crystal pixel 105 to be set to the white display mode.

The configuration discussed above allows a line voltage, the first and second voltage signals, and the reference voltage to be driven at a level of a logic voltage. Also, little current flows, because it is able to hold display state by a data hold function of a memory circuit, in the case that the rewriting of a screen display is not necessary. In addition, writing to a pixel is controlled by a logic of the selection signals of the two scanning lines, namely, rows and columns, so as to enable control of the pixels independently of potentials of the data lines. This arrangement obviates the need for complicated control in a conventional static drive liquid crystal device in which data signals of two data lines are set to have opposite phases (complementary data signals) for writing when data is written, and in which the data lines are set at a high impedance for holding data so as to set transistors connected to the data lines to a nonconducting state. Moreover, since the single switching control circuit 109 simultaneously controls the two liquid crystal pixel driving circuits 101, the switching control circuits 109 can be reduced to a half, and the circuit configurations of the column scanning line driving circuit 113 can be simplified.

Each of the liquid crystal pixels 105 is provided with the pixel electrode 106 to which either the first voltage 116 or the second voltage 117 that has been selected according to a held data signal is supplied from the liquid crystal pixel driver 104. A liquid crystal layer 107 lying between the pixel electrode 106 and the common electrode 108 is subjected to a potential difference between the two electrodes, and the black display mode (or the ON display mode) or the white display mode (or the OFF display mode) is set according to a change in alignment of liquid crystal molecules based on the potential difference. In a liquid crystal device, a liquid crystal is sealed and sandwiched between a semiconductor substrate and a light transmitting substrate, such as glass, pixel electrodes are disposed in a matrix pattern on the semiconductor substrate, and the liquid crystal pixel driving circuits, the row scanning lines, the column scanning lines, the data lines, the row scanning line driving circuit, the column scanning line driving circuit, etc. mentioned above are formed under the pixel electrodes. Highly mobile complementary transistors having a MOS structure can be formed on a semiconductor substrate, and a multilayer wiring structure can be easily formed. Hence, by using the transistors and the multilayer wiring, various circuits mentioned above can be configured. For each pixel, a voltage is applied (pixel by pixel) between the pixel electrode 106 and the common electrode 108 formed on an inner surface of the opposing light transmitting substrate, thereby supplying a voltage to the liquid crystal layer 107 for each pixel that lies therebetween so as to change the alignment of liquid crystal molecules for each pixel.

In this case, if the pixel electrode 106 of the liquid crystal pixel 105 is formed as a light reflecting electrode of a metal, a dielectric multilayer film, or the like, and the liquid crystal pixel driving circuit 101 is provided on the semiconductor substrate under the liquid crystal pixel electrodes via an electrical insulation film, then an aperture ratio is markedly improved. More specifically, in the past, each liquid crystal pixel driving circuit was formed using a TFT on a light tarnsimitting substrate, and an area occupied by the liquid crystal pixel driving circuit, which does not provide a light transmitting region, in an area of one pixel limited the aperture ratio of the liquid crystal pixel. In comparison, the pixel electrodes and the liquid crystal pixel driving circuits are laminated according to the present invention, so that reflective pixel electrodes that occupy almost an entire area of one pixel can be disposed above the liquid crystal pixel driving circuit. Therefore, the aperture ratio can be dramatically improved, allowing a brighter, easier-to-read screen to be achieved.

The column scanning line driving circuit 113 of Fig. 5 can be formed using a shift register circuit shown in Fig. 9. In Fig. 9, a column scanning line driving circuit control signal 121 composed of two signals, namely, a scanning signal 121-1 of positive logic (H-level is an active level) and a clock signal 121-2 is inputted, and the column scanning lines 112-m can be selected in sequence in synchronization with the clock signal 121-2 by negative logic (L-level is an active level). More specifically, the clock signal 121-2, together with a signal that has been inverted by an inverter 113-6 formed of a CMOS transistor, is used as a control signal for the shift register circuit. The scanning signal 121-1 is captured by a clocked inverter 113-1 formed of a CMOS transistor in a first stage at a rise of the clock signal 121-2, inverted by an inverter 113-3 formed of a CMOS transistor, and an output is fed back by clocked inverters 113-2 and 113-4 formed of two CMOS transistors at a fall of the clock signal 121-2 to perform an operation for holding a scanning signal and an operation for transferring the scanning signal to the following stage, thereby transferring the scanning signals in sequence. A NAND gate circuit 113-5 formed of a CMOS transistor obtains a logical conjunction of outputs of two adjoining stages, and outputs selection signals. The NAND gate circuit 113-5 is provided so that output phases of the selection signals 112-m and 112-m+1 do not overlap each other. With this arrangement, the scanning lines are selected one after another.

Similarly, configuring the row scanning line driving circuit 111 by a shift register circuit similar to that shown in Fig. 9 makes it possible to simplify the circuit configurations and control of the two scanning line driving circuits.

The column scanning line driving circuit 113 can be formed of a decoder circuit of a number of bits (AX0, /AX0, to AX7, /AX7) corresponding to a number of scanning lines, as shown in Fig. 10. The decoder circuit can be configured to receive the column scanning line driving circuit control signal 121 composed of an address signal, wherein the control signal 121 is decoded by a NAND gate circuit 113-7 formed of a CMOS transistor to select a corresponding column scanning line 112-m, and a selection signal can be output. This arrangement allows a selection signal to be output to an arbitrary scanning line according to an address signal, permitting pixels to be accessed at random.

By configuring the row scanning line driving circuit 111 by a decoder circuit similar to that showin in Fig. 10, when only partial display on a screen has to be rewritten, a liquid crystal pixel driving circuit for only a target pixel can be controlled to rewrite a data signal. In the present invention, each pixel is provided with the memory circuit 103, and unless the switching circuit 102 conducts by a selection signal of row and column scanning lines, the data signal written to the memory circuit 103 is retained. Hence, only the pixel to be rewritten can be accessed for rewriting.

As shown in Fig. 6, in this embodiment, the switching control circuit 109 can be configured by a logic circuit of a NOR gate circuit 109-1 formed of a CMOS transistor and an inverter 109-2 formed of a CMOS transistor. The NOR gate circuit 109-1,outputs an ON signal of the positive logic when selection signals of the negative logic are applied to two inputs thereof, and an ON signal of the negative logic is output by the inverter 109-2. Furthermore, the switching circuit 102 can be configured by a transmission gate 102-1 formed of a CMOS transistor. The transmission gate 102-1 is set to the conducting state based on the ON signal of the switching control circuit 109 to connect the column data line 115 and the memory circuit 103, whereas it is set to the nonconducting state based on the OFF signal. The memory circuit 103 can be configured so that a clocked inverter 103-1 formed of a CMOS transistor and an inverter 103-2 formed of a CMOS transistor are feedback-connected. The data signal is captured from the switching circuit 102 into the memory circuit 103 in response to an ON signal of the switching control circuit 109 and inverted by the inverter 103-2, and an output is fed back by a clocked inverter 103-1 operated by the OFF signal of the switching control circuit 109 so as to hold the data signal. The liquid crystal pixel driver 104 can be configured by transmission gates 104-1 and 104-2 formed of two CMOS transistors. If the data signal held at the memory circuit 103 is at the H-level, then the transmission gate 104-1, which is connected to the first voltage signal line 118 that causes a liquid crystal to provide the black display in the case of the normally white display mode, is set to a conducting state in the liquid crystal pixel driver 104, and the first voltage 116 is supplied to the pixel electrode 106, causing the liquid crystal pixel 105 to be set to the black display mode due to a potential difference from the reference voltage 122 supplied to the common electrode 108. Similarly, if the held data signal is at the L-level, then the transmission gate 104-2 connected to the second voltage signal line 119 is set to the conducting state, causing the second voltage 117 to be supplied to the pixel electrode 106, so that the liquid crystal pixel 105 set to in the white display mode.

In this embodiment, the two bits of simultaneous input data signals are used, however, the number of bits is not limited thereto. For example, three bits of the simultaneous input data signal may be used in order to simultaneously input data signals for three colors, RGB, for performing color display.

### [Fourth Embodiment]

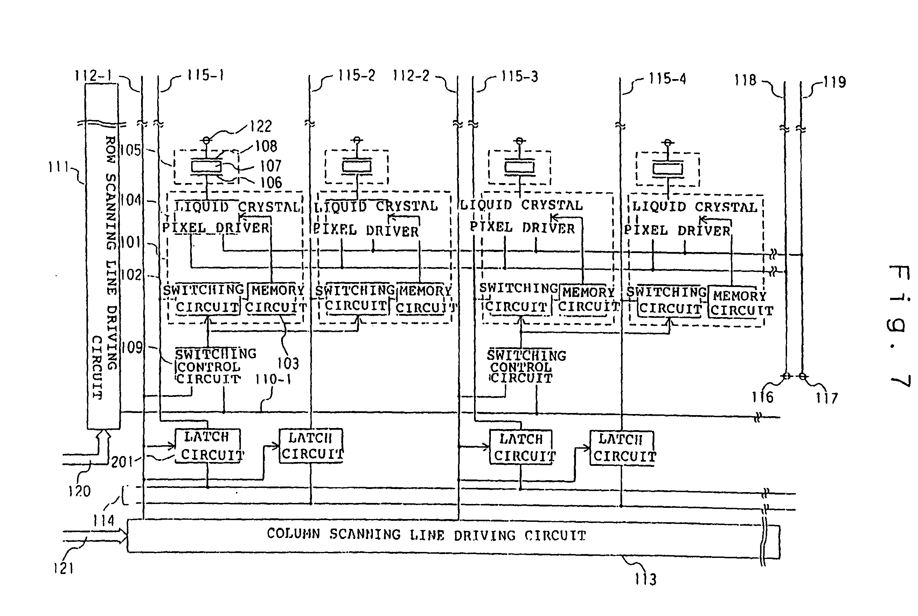

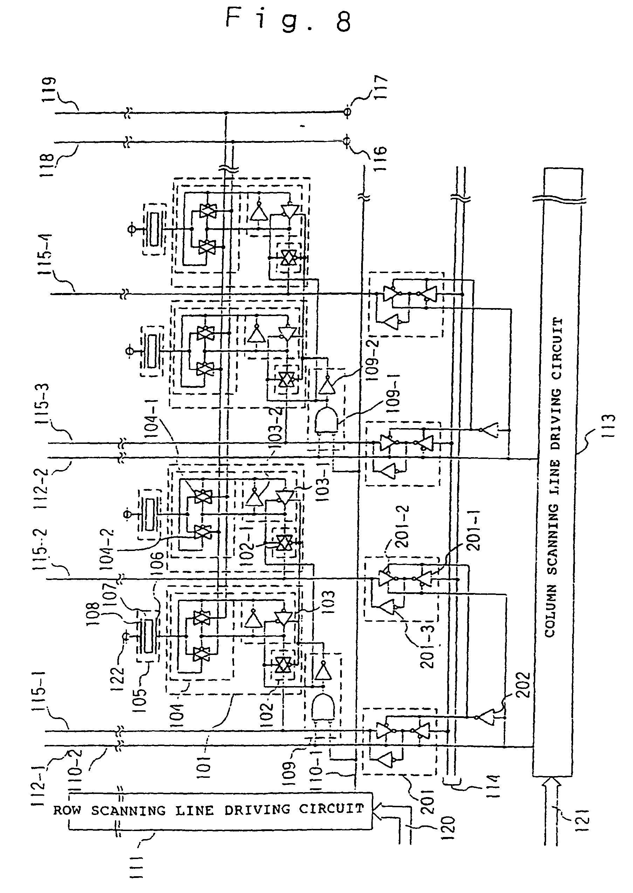

Fig. 7 is a block diagram showing essential sections of pixels and driving circuits or the like in a liquid crystal device that is an electro-optic device of a fourth embodiment in accordance with the present invention, and Fig. 8 is a detailed circuit diagram thereof.

As shown in Fig. 7, this embodiment is configured by adding a latch circuit 201, which is disposed at a point where a column data line 115 is branched from an input data line 114, to the block diagram of Fig. 5 shown in conjunction with the third embodiment. In this embodiment, configurations not explained in particular are identical to those of the third embodiment.

When the latch circuit 201 captures a data signal from the input data line 114 into a corresponding column data line 115-d when a column scanning line 112-m is selected, or holds the data signal of the column data line 115-d when the column scanning line 112-m is not selected.

According to this configuration, a capacitance parasitic to the input data line 114 can be reduced to only a capacitance of the column data line 115 connected to the selected latch circuit 201, permitting a marked reduction in power consumption to be achieved.

As illustrated in Fig. 8, this embodiment is constituted by adding the latch circuit 201 to the circuit diagram of Fig. 6 shown in conjunction with the third embodiment. The latch circuit 201 can be constituted by a logic circuit composed of clocked inverters 201-1 and 201-2 formed of CMOS transistors, and an inverter 201-3 formed of a CMOS transistor. A selection signal of the column scanning line 112-m, together with a signal that has been inverted by an inverter 202 formed of a CMOS transistor, is used as a signal for controlling the latch circuit 201. The data signal received from the input data line 114 is captured by the clocked inverter 201-1 in the first stage at a fall of a selection signal of the column scanning line 112-m , inverted by an inverter 201-3, and an output is fed back by the clocked inverter 201-2 at a rise of a selection signal of the column scanning line 112-m to perform an operation for holding the data signal.

In this embodiment, the two bits of simultaneous input data signals are used, however, the number of bits is not limited thereto. For example, three bits of the simultaneous input data signal may be used in order to simultaneously input data signals for three colors, RGB, for performing color display.

### [Fifth Embodiment]

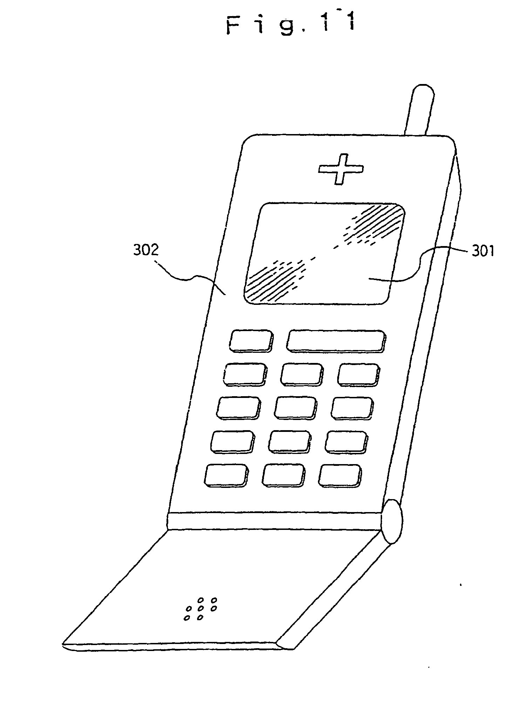

Fig. 11 shows an example wherein the electro-optic device of the present invention according to the first to fourth embodiments described above has been applied to a portable telephone. The liquid crystal device in accordance with the present invention is used as a display unit 301 of a portable telephone 302.

With the foregoing arrangement, a considerably prolonged service life can be achieved, as compared with electronic equipment using a conventional passive matrix liquid crystal device in a battery-driven mode. In addition, a simpler control method and a simpler control circuit configuration can be accomplished, as compared with a conventional static drive liquid crystal device.

In this embodiment, the portable telephone has been taken as an example, however, the application is not limited thereto. For instance, the electro-optic device in accordance with the present invention can be also applied to various types of electronic equipment, such as timepieces, pagers, and projectors. In the case of a projector, the electro-optic device in accordance with the present invention will be used as an optical modulator.

The electro-optic device in accordance with the present invention is not limited to the above embodiments, and various changes and modifications can be made within the scope of the invention. Electro-optic devices with such modifications are intended to be embraced in the technological scope of the present invention.

For example, in the embodiments, the descriptions have been given using liquid crystal devices as the electro-optic devices. However, the present invention can be also applied to electro-optic devices in which liquid crystal pixels have been replaced by other electro-optic members. Electro-optic devices other than liquid crystal devices include a digital micro-mirror device (DMD) in which a mirror is disposed for each pixel and an angle of the mirror is changed according to an image signal, and self-emissive display devices provided with a luminescent element for each pixel, such as a plasma display panel (PDP), a field emission display (FED), and electroluminescence (EL). These electro-optic devices may be of a type constructed only by a single substrate on which a pixel circuit has been formed or a type that uses a glass substrate rather than a semiconductor substrate, however, the present invention can be also applied to such structures.

## Claims

1. An electro-optic device comprising, on a substrate thereof,
a plurality of row scanning lines (110-n) and a plurality of column scanning lines (112-m) that intersect with each other;
a plurality of column data lines (115-d) provided along said plurality of column scanning lines (112-m); and
a first and second voltage signal lines (118, 119) that supply first and second voltage signals (116, 117);
a plurality of pixel driving circuits (101) disposed corresponding to intersections of said plurality of row scanning lines (110-n) and said plurality of column scanning lines (112-m), the plurality of pixel driving circuits (101) comprising:
a pixel electrode (106) disposed at a pixel (105);
a switching circuit (102) that is set to a conducting state by a conduction control signal output by a switching control circuit (109) when a corresponding row scanning line (110-n) of the plurality of row scanning lines (110-n) and a corresponding column scanning line (110-n) of the plurality of column scanning lines (112-m) is selected, and is set to a non-conducting state by a non-conduction control signal outputted by the switching control circuit (109) when at least one of said row scanning line (110-n) and said column scanning line (112-m) is not selected;
a memory circuit (103) including a CMOS transistor, the memory circuit (103) capturing data signals of a column data line (115-d) of the plurality of column data lines (115-d) when said switching circuit (102) is in the conducting state, and holding data signals provided by a column data line (115-d) of the plurality of column data lines (115-d) when said switching circuit (102) is in the nonconducting state; and
a pixel driver (104) that outputs the first voltage signal (116) to the pixel (105) from the first voltage signal line (118) when a data signal held in said memory circuit (103) is at a first level, and that outputs the second voltage signal (117) to the pixel (105) from said second voltage signal line (119) when the data signal is at a second level;
the electro-optic device **characterised in that**:
the switching control circuit (109) simultaneously controls a number of the plurality of pixel driving circuits (101) according to the number of input data lines for a number of simultaneously input data bits, the plurality of column data lines (115-d) are provided branched from the input data lines (114) and the same data signal is applied simultaneously to the column data lines branched from each input data line (114); and **in that** in the corresponding memory circuit (103) in accordance with the conducting signal from the switching control circuit (109), the plurality of pixel driving circuits (101) captures data signals from the plurality of column data lines (115-d) branched from the input data lines (114), and supplies, to a respective pixel electrode (106), voltage signals in accordance with the data signals held in the corresponding memory circuits (103).

2. An electro-optic device according to claim 1, wherein the pixel electrode (106) disposed at said pixel (105) is a light reflective type electrode, and said pixel driving circuit (101) is provided under said pixel electrode (106) and separated from the pixel electrode (106) by an electrical insulation film.

3. An electro-optic device according to any of claims 1 or 2, further comprising a row scanning line driving circuit (111) for supplying row scanning signals (120) to said plurality of row scanning lines (110-n) and a column scanning line driving circuit (113) for supplying column scanning signals (121) to said plurality of column scanning lines (112-m), wherein at least either said row scanning line driving circuit (111) or said column scanning line driving circuit (113) is constituted by a shift register circuit.

4. The electro-optic device according to any of claims 1 to 3, further comprising a row scanning line driving circuit (111) for supplying row scanning signals (120) to said plurality of row scanning lines (110-n) and a column scanning line driving circuit (113) for supplying column scanning signals (121) to said plurality of column scanning lines (112-m), wherein at least either the row scanning line driving circuit (111) or the column scanning line driving circuit (113) is constituted by a decoder circuit that selects a pertinent scanning line according to an address signal of a number of bits corresponding to a number of scanning lines.

5. The electro-optic device according to any of claims 1 to 4, wherein a circuit device structure in the electro-optic device is a CMOS structure.

6. An electronic equipment comprising the electro-optic device described in any of claims 1 to 5.

## Patentansprüche

1. Elektrooptische Einheit, umfassend auf einem Substrat:
eine Mehrzahl von Reihenabtastleitungen (110-n) und eine Mehrzahl von Spaltenabtastleitungen (112-m), die einander schneiden;
eine Mehrzahl von Spaltendatenleitungen (115-d), die entlang der Mehrzahl von Spaltenabtastleitungen (112-m) bereitgestellt sind; und
eine erste und zweite Spannungssignalleitung (118, 119), die erste und zweite Spannungssignale (116, 117) zuleiten;
eine Mehrzahl von Pixeltreiberschaltungen (101), die entsprechend den Schnittpunkten der Mehrzahl von Reihenabtastleitungen (110-n) und der Mehrzahl von Spaltenaktastleitungen (112-n) angeordnet sind, wobei die Mehrzahl von Pixeltreiberschaltungen (101) umfasst:
eine Pixelelektrode (106), die an einem Pixel (105) angeordnet ist;
eine Verknüpfungsschaltung (102), die durch ein Leitungssteuersignal, das von einer Verknüpfungssteuerschaltung (109) ausgegeben wird, in einen leitenden Zustand gesetzt wird, wenn eine entsprechende Reihenabtastleitung (110-n) der Mehrzahl von Reihenabtastleitungen (110-n) und eine entsprechende Spaltenabtastleitung (112-m) der Mehrzahl von Spaltenabtastleitungen (112-m) gewählt wird, und durch ein Nicht-Leitungssteuersignal, das von der Verknüpfungssteuerschaltung (109) ausgegeben wird, in einen nicht leitenden Zustand gesetzt wird, wenn mindestens eine der Reihenabtastleitungen (110-n) und der Spaltenabtastleitungen (112-m) nicht gewählt wird;
eine Speicherschaltung (103), die einen CMOS-Transistor enthält, wobei die Speicherschaltung (103) Datensignale einer Spaltendatenleitung (115-d) der Mehrzahl von Spaltendatenleitungen (115-d) erfasst, wenn die Verknüpfungsschaltung (102) im leitenden Zustand ist, und Datensignale hält, die von einer Spaltendatenleitung (115-d) der Mehrzahl von Spaltendatenleitungen (115-d) bereitgestellt werden, wenn sich die Verknüpfungsschaltung (102) im nicht leitenden Zustand befindet; und
einen Pixeltreiber (104), der das erste Spannungssignal (116) von der ersten Spannungssignalleitung (118) an das Pixel (105) ausgibt, wenn ein Datensignal, das in der Speicherschaltung (103) gehalten wird, auf einem ersten Pegel ist, und das zweite Spannungssignal (117) von der zweiten Spannungssignalleitung (119) an das Pixel (105) ausgibt, wenn das Datensignal auf einem zweiten Pegel ist;
wobei die elektrooptische Einheit **dadurch gekennzeichnet ist, dass**:
die Verknüpfungssteuerschaltung (109) gleichzeitig eine Reihe der Mehrzahl von Pixeltreiberschaltungen (101) entsprechend der Anzahl von Eingangsdatenleitungen für eine Anzahl gleichzeitiger Eingangsdatenbits steuert, wobei die Mehrzahl von Spaltendatenleitungen (115-d) als Abzweigungen von den Eingangsdatenleitungen (114) bereitgestellt ist und dasselbe Datensignal gleichzeitig an die Spaltendatenleitungen angelegt wird, die von jeder Eingangsdatenleitung (114) abzweigen; und dass
in der entsprechenden Speicherschaltung (103) gemäß dem leitenden Signal von der Verknüpfungssteuerschaltung (109) die Mehrzahl von Pixeltreiberschaltungen (101) Datensignale von der Mehrzahl von Spaltendatenleitungen (115-d) erfasst, die von den Eingangsdatenleitungen (114) abzweigen, und Spannungssignale einer entsprechenden Pixelelektrode (106) gemäß den Datensignalen zuleitet, die in den entsprechenden Speicherschaltungen (103) gehalten werden.

2. Elektrooptische Einheit nach Anspruch 1, wobei die Pixelelektrode (106), die an dem Pixel (105) angeordnet ist, eine Elektrode vom Licht reflektierenden Typ ist, und die Pixeltreiberschaltung (101) unter der Pixelelektrode (106) bereitgestellt und von der Pixelelektrode (106) durch einen elektrischen Isolierfilm getrennt ist.

3. Elektrooptische Einheit nach einem der Ansprüche 1 oder 2, des Weiteren umfassend eine Reihenabtastleitungstreiberschaltung (111), die Reihenabtastsignale (120) zu der Mehrzahl von Reihenabtastleitungen (110-n) leitet, und eine Spaltenabtastleitungstreiberschaltung (113), die Spaltenabtastsignale (121) zu der Mehrzahl von Spaltenabtastleitungen (112-m) leitet, wobei mindestens entweder die Reihenabtastleitungstreiberschaltung (111) oder die Spaltenabtastleitungstreiberschaltung (113) durch eine Schieberegisterschaltung gebildet ist.

4. Elektrooptische Einheit nach einem der Ansprüche 1 bis 3, des Weiteren umfassend eine Reihenabtastleitungstreiberschaltung (111), die Reihenabtastsignale (120) zu der Mehrzahl von Reihenabtastleitungen (110-n) leitet, und eine Spaltenabtastleitungstreiberschaltung (113), die Spaltenabtastsignale (121) zu der Mehrzahl von Spaltenabtastleitungen (112-m) leitet, wobei mindestens entweder die Reihenabtastleitungstreiberschaltung (111) oder die Spaltenabtastleitungstreiberschaltung (113) durch eine Dekodierschaltung gebildet ist, die eine zweckdienliche Abtastleitung gemäß einem Adressensignal aus einer Anzahl von Bits entsprechend einer Anzahl von Abtastleitungen wählt.

5. Elektrooptische Einheit nach einem der Ansprüche 1 bis 4, wobei eine Schaltungseinheitsstruktur in der elektrooptischen Einheit eine CMOS-Struktur ist.

6. Elektronische Einheit, die die elektrooptische Einheit umfasst, die in einem der Ansprüche 1 bis 5 beschrieben ist.

## Revendications

1. Dispositif électro-optique comprenant, sur un substrat de celui-ci,
une pluralité de lignes de balayage de rangées (110-n) et une pluralité de lignes de balayage de colonnes (112-m) se croisant les unes les autres;
une pluralité de lignes de données de colonnes (115-d) fournies le long de ladite pluralité de lignes de balayage de colonnes (112-m) ; et
une première et une deuxième ligne de transfert de signaux de tension (118, 119) fournissant des premier et deuxième signaux de tension (116, 117);
une pluralité de circuits d'attaque de pixels (101) disposés de manière à correspondre à des intersections entre ladite pluralité de lignes de balayage de rangées (110-n) et ladite pluralité de lignes de balayage de colonnes (112-m), la pluralité des circuits d'attaque de pixels (101) comprenant :
une électrode de pixel (106) disposée au niveau d'un pixel (105) ;
un circuit de commutation (102) qui est mis à l'état passant grâce à un signal de commande de la conduction émis par un circuit de commande de la commutation (109), lorsqu'une ligne de balayage de rangée (110-n) correspondante parmi la pluralité de lignes de balayage de rangées (110-n) et une ligne de balayage de colonne (110-n) correspondante parmi la pluralité de lignes de balayage de colonnes (112-m) est sélectionnée, et qui est mis à l'état non passant grâce à un signal de commande de non conduction émis par le circuit de commande de la commutation (109), lorsque au moins une parmi ladite ligne de balayage de rangée (110-n) et ladite ligne de balayage de colonne (112-m) n'est pas sélectionnée ;
un circuit de mémoire (103) incluant un transistor CMOS, le circuit de mémoire (103) capturant des
signaux de données d'une ligne de données de colonne (115-d) parmi la pluralité de lignes de données de colonnes (115-d), lorsque ledit circuit de commutation (102) est à l'état passant, et conservant des signaux de données fournis par une ligne de données de colonne (115-d) parmi la pluralité de lignes de données de colonnes (115-d), lorsque ledit circuit de commutation (102) est à l'état non passant ; et
un gestionnaire de pixel (104) faisant sortir le premier signal de tension (116) à l'attention du pixel (105) à partir de la première ligne de transfert de signaux de tension (118), lorsqu'un signal de données conservé dans ledit circuit de mémoire (103) se trouve à un premier niveau, et faisant sortir le deuxième signal de tension (117) à l'attention du pixel (105) à partir de ladite deuxième ligne de transfert de signaux de tension (119), lorsque le signal de données se trouve à un deuxième niveau ;
le dispositif électro-optique **se caractérisant en ce que** :
le circuit de commande de la commutation (109) commande simultanément un certain nombre parmi la pluralité des circuits d'attaque de pixels (101) en fonction du nombre de lignes de données d'entrée pour un certain nombre de bits de données simultanément entrés, la pluralité de lignes de données de colonnes (115-d) étant fournie de manière à se ramifier à partir des lignes de données d'entrée (114), et le même signal de données étant appliqué simultanément aux lignes de données de colonnes se ramifiant à partir de chaque ligne de données d'entrée (114) ; et **en ce que**
dans le circuit de mémoire correspondant (103), en fonction du signal de conduction provenant du circuit de commande de la commutation (109), la pluralité de circuits d'attaque de pixels (101) capture des signaux de données provenant de la pluralité des lignes de données de colonnes (115-d) se ramifiant à partir des lignes de données d'entrée (114), et fournit à l'attention d'une électrode de pixel (106) respective, des signaux de tension en fonction des signaux de données conservés dans les circuits de mémoire correspondants (103).

2. Dispositif électro-optique selon la revendication 1, où l'électrode de pixel (106) disposée au niveau dudit pixel (105) est une électrode de type à réflexion de lumière, et où ledit circuit d'attaque de pixel (101) est fournit sous ladite électrode de pixel (106) et de manière séparée de l'électrode de pixel (106) grâce à une pellicule isolante électrique.

3. Dispositif électro-optique selon l'une quelconque des revendications 1 ou 2, comprenant par ailleurs un circuit d'attaque de ligne de balayage de rangée (111) pour fournir des signaux de balayage de rangées (120) à ladite pluralité de lignes de balayage de rangées (110-n), et un circuit d'attaque de ligne de balayage de colonne (113) pour fournir des signaux de balayage de colonnes (121) à ladite pluralité de lignes de balayage de colonnes (112-m), où au moins soit ledit circuit d'attaque de ligne de balayage de rangée (111), soit ledit circuit d'attaque de ligne de balayage de colonne (113), est formé par un circuit de registre à décalage.

4. Dispositif électro-optique selon l'une quelconque des revendications 1 à 3, comprenant par ailleurs un circuit d'attaque de ligne de balayage de rangée (111) pour fournir des signaux de balayage de rangée (120) à ladite pluralité de lignes de balayage de rangées (110-n), et un circuit d'attaque de ligne de balayage de colonne (113) pour fournir des signaux de balayage de colonnes (121) à ladite pluralité de lignes de balayage de colonnes (112-m), où au moins soit le circuit d'attaque de ligne de balayage de rangée (111), soit le circuit d'attaque de ligne de balayage de colonne (113), est formé par un circuit de décodage qui sélectionne une ligne de balayage pertinente en fonction d'un signal d'adresse d'un nombre de bits correspondant à un nombre de lignes de balayage.

5. Dispositif électro-optique selon l'une quelconque des revendications 1 à 4, où une structure du dispositif de circuit dans le dispositif électro-optique, est une structure CMOS.

6. Equipement électronique comprenant le dispositif électro-optique décrit dans l'une quelconque des revendications 1 à 5.
